# EUROPEAN PATENT APPLICATION

(11) **EP 4 513 301 A1**
(43) Date of publication of application: **26.02.2025**
(21) Application number: 23935061.4
(22) Date of filing: 24.11.2023
(51) Int. Cl.: G06F 1/32

(54) **LAYER COMPOSITION METHOD AND TERMINAL DEVICE**

(30) Priority: 26.04.2023 CN 202310478477
(71) Applicant: Huawei Technologies Co., Ltd., Shenzhen, Guangdong 518129 (CN)
(72) Inventor: YANG, Tao, Shenzhen, Guangdong 518129 (CN); WANG, Weizhou, Shenzhen, Guangdong 518129 (CN); LI, Xiang, Shenzhen, Guangdong 518129 (CN); LOU, Chenglin, Shenzhen, Guangdong 518129 (CN); ZHOU, Yiyang, Shenzhen, Guangdong 518129 (CN)
(74) Representative: Grünecker Patent- und Rechtsanwälte PartG mbB
(86) International application number: PCT/CN2023/134106
(87) International publication number: WO 2024/221893

(57) **Abstract**

A layer composition method and a terminal device are disclosed, and relate to the field of terminal technologies, to reduce load related to UI display on an AP, reduce power consumption of the terminal device, and prolong battery life of the terminal device. The method is applied to a terminal device including a first processing unit and a second processing unit, and includes: obtaining a composition request of a first layer, where the first layer is a layer rendered by using the first processing unit; and in response to the composition request of the first layer, compositing the first layer into an image by using the second processing unit. The first processing unit is a high-power processing unit, and the second processing unit is a low-power processing unit.

## Description

This application claims priority to Chinese Patent Application No. 202310478477.X, filed with the China National Intellectual Property Administration on April 26, 2023 and entitled "LAYER COMPOSITION METHOD AND TERMINAL DEVICE", which is incorporated herein by reference in its entirety.

### TECHNICAL FIELD

This application relates to the field of terminal technologies, and in particular, to a layer composition method and a terminal device.

### BACKGROUND

Currently, to effectively reduce power consumption of a terminal device, the terminal device usually uses a heterogeneous architecture. The heterogeneous architecture includes an application processor (application processor, AP) with a high computing capability and a coprocessor (coprocessor, CP) with low power consumption.

Although the terminal device has used the heterogeneous architecture, in a system of the terminal device, load related to user interface (user interface, UI) display is deployed on the AP. Consequently, the terminal device still has high power consumption and poor battery life.

### SUMMARY

This application provides a layer composition method and a terminal device, to reduce load related to UI display on an AP, reduce power consumption of the terminal device, and prolong battery life of the terminal device.

To achieve the foregoing purpose, the following technical solutions are used in this application.

According to a first aspect, a layer composition method is provided. The method is applied to a terminal device including a first processing unit and a second processing unit. The method includes: obtaining a composition request of a first layer, where the first layer is a layer rendered by using the first processing unit; and in response to the composition request of the first layer, compositing the first layer into an image by using the second processing unit. The first processing unit is a high-power processing unit, and the second processing unit is a low-power processing unit.

Based on the foregoing technical solution, after obtaining a composition request of a layer rendered by a high-power processing unit, for example, an AP, a terminal device composites the layer into an image by using a low-power processing unit, for example, a CP. In other words, the high-power processing unit does not perform layer composition. In this way, load for performing layer composition does not exist on the high-power processing unit. In other words, this reduces load related to UI display on the high-power processing unit. For compositing the layer into the image, the low-power processing unit consumes less power than the high-power processing unit. In addition, after layer composition is transferred to the low-power processing unit for execution, a probability that the high-power processing unit sleeps may increase. This may further reduce power consumption of the terminal device, and prolong battery life of the terminal device.

In a possible design, the composition request of the first layer indicates the terminal device to composite the first layer into the image by using the first processing unit. Based on this design, after obtaining a request indicating to perform layer composition by using the high-power processing unit, the terminal device performs layer composition by using the low-power processing unit. This is equivalent to transferring layer composition on the high-power processing unit to the low-power processing unit for execution. In other words, the load related to UI display deployed on the high-power processing unit is deployed on the low-power processing unit. In other words, this reduces the load related to UI display on the high-power processing unit. For compositing the layer, the low-power processing unit consumes less power than the high-power processing unit. In addition, after layer composition is transferred to the low-power processing unit for execution, the probability that the high-power processing unit sleeps may increase. This may further reduce power consumption of the terminal device, and prolong the battery life of the terminal device.

In a possible design, before the compositing the first layer into an image by using the second processing unit, the method further includes: The second processing unit receives the first layer from the first processing unit. Because the first layer is rendered by the high-power processing unit, based on this design, the low-power processing unit may obtain the rendered first layer from the high-power processing unit, to subsequently perform composition on the first layer.

In a possible design, the method further includes: if a display permission belongs to the first processing unit, switching the display permission to the second processing unit, where the display permission is a permission for controlling a display subsystem DSS. It may be understood that the image obtained through composition may be sent to a display screen for display only when the display permission is obtained. Based on this design, the display permission is switched from the high-power processing unit to the low-power processing unit. The low-power processing unit may directly send the image obtained through composition to the display screen for display. This may reduce power consumption of the terminal device.

In a possible design, the switching the display permission to the second processing unit includes: The first processing unit powers off the DSS. The first processing unit sends a first message to the second processing unit. In response to the first message, the second processing unit powers on the DSS. It may be understood that a DSS driver is connected to the DSS, in other words, the DSS may be powered on. The DSS driver is disconnected from the DSS, in other words, the DSS may be powered off. The high-power processing unit and the low-power processing unit may use different DSS drives. Therefore, the high-power processing unit powers off the DSS, and the low-power processing unit powers on the DSS, so that the low-power processing unit may drive the DSS by using a DSS driver of the low-power processing unit.

In a possible design, after the compositing the first layer into an image by using the second processing unit, the method further includes: The second processing unit sends a status synchronization message to the first processing unit. The status synchronization message indicates that the second processing unit has composited the first layer into the image. Based on this design, after completing composition, the low-power processing unit indicates to the high-power processing unit that composition is completed. This may help the high-power processing unit prepare to-be-composited data for a next frame of image (or send to-be-composited data for a next frame of image to the low-power processing unit).

In a possible design, the method further includes: The second processing unit obtains a vertical synchronization VSYNC signal. The second processing unit sends the VSYNC signal to the first processing unit. The VSYNC signal indicates the first processing unit to render a layer included in the next frame of image. Based on this design, when the low-power processing unit performs layer composition, the VSYNC signal may be obtained by the low-power processing unit. The low-power processing unit may send the VSYNC signal to the high-power processing unit, so that the high-power processing unit performs rendering.

In a possible design, the terminal device further includes a third processing unit, and the method further includes: obtaining a composition request of a second layer; and if the composition request of the second layer indicates the terminal device to composite the second layer into an image by using the third processing unit, compositing, by the terminal device in response to the composition request of the second layer, the second layer into the image by using the third processing unit. Based on this design, after receiving a request for performing composition by using the third processing unit, the terminal device performs composition by using the third processing unit. In other words, composition to be performed by the third processing unit is not transferred to the low-power processing unit for execution. The third processing unit may perform some layer composition that cannot be performed by the low-power processing unit, or layer composition with high requirements. This facilitates execution of the layer composition.

In a possible design, the method further includes: if the display permission belongs to the second processing unit, switching the display permission to the first processing unit. Based on this design, if a previous frame of image is obtained through layer composition by the low-power processing unit, the display permission belongs to the low-power processing unit. However, when the third processing unit needs to perform layer composition for the next frame of image, the display permission needs to be switched from the low-power processing unit to the AP, so that the third processing unit can complete layer composition for display.

In a possible design, the switching the display permission to the first processing unit includes: The first processing unit sends a second message to the second processing unit. In response to the second message, the second processing unit powers off the DSS. The second processing unit sends a third message to the third processing unit. In response to the third message, the first processing unit powers on the DSS. Based on this design, in this way, the low-power processing unit powers off the DSS, and the high-power processing unit powers on the DSS, so that the high-power processing unit may drive the DSS by using a DSS driver of the high-power processing unit.

In a possible design, the first processing unit includes an application processor AP, and/or the second processing unit includes a coprocessor CP, and/or the third processing unit includes a graphics processing unit GPU.

According to a second aspect, a terminal device is provided. The terminal device has a function of implementing the method according to any one of the first aspect and designs of the first aspect. The function may be implemented by hardware, or may be implemented by hardware executing corresponding software. The hardware or the software includes one or more modules corresponding to the foregoing function.

According to a third aspect, a terminal device is provided. The terminal device includes a processor and a memory. The memory is coupled to the processor. The memory is configured to store computer program code. The computer program code includes computer instructions. The processor reads the computer instructions from the memory, to enable the terminal device to perform the method according to any one of the first aspect and designs of the first aspect.

In a possible design, the processor includes a first processor and a second processor. The first processor is a high-power processor, and the second processor is a low-power processor. The first processor is configured to perform the method performed by the first processing unit according to any one of the first aspect and the designs of the first aspect. The second processor is configured to perform the method performed by the second processing unit according to any one of the first aspect and the designs of the first aspect. For example, the first processor may include an AP, and the second processor may include a CP or the like.

In a possible design, the processor may further include a third processor. The third processor is configured to perform the method performed by the third processing unit according to any one of the first aspect and the designs of the first aspect.

In a possible design, the terminal device further includes a communication interface. The communication interface may be used for communication between the terminal device and another apparatus (for example, a terminal device). For example, the communication interface may be a transceiver, an input/output interface, an interface circuit, an output circuit, an input circuit, a pin, a related circuit, or the like.

In a possible design, the terminal device may further include a display screen. The display screen may be used by the terminal device to perform display, for example, displaying an image obtained through composition.

According to a fourth aspect, a computer-readable storage medium is provided. The computer-readable storage medium includes a computer program or instructions. When the computer program or the instructions are run on a terminal device, the terminal device is enabled to perform the method according to any one of the first aspect and designs of the first aspect.

According to a fifth aspect, a computer program product is provided. When the computer program product is run on a computer, the computer can perform the method according to any one of the first aspect and designs of the first aspect.

According to a sixth aspect, a circuit system is provided. The circuit system includes a processing circuit. The processing circuit is configured to perform the method according to any design of the first aspect.

According to a seventh aspect, a chip system is provided. The chip system includes at least one processor and at least one interface circuit. The at least one interface circuit is configured to perform a transceiver function and send instructions to the at least one processor. When the at least one processor executes the instructions, the at least one processor performs the method according to any one of the first aspect and designs of the first aspect.

It should be noted that for a technical effect brought by any design of the second aspect to the seventh aspect, refer to a technical effect brought by a corresponding design of the first aspect or the second aspect. Details are not described herein again.

### BRIEF DESCRIPTION OF DRAWINGS

FIG. 1 is a schematic diagram of an interface according to an embodiment of this application;
FIG. 2 is a schematic diagram of an architecture in which load is deployed on a terminal device according to an embodiment of this application;
FIG. 3 is a schematic diagram of UI display load according to an embodiment of this application;
FIG. 4 is a schematic flowchart of a layer composition method;
FIG. 5 is a schematic diagram of a structure of a terminal device according to an embodiment of this application;
FIG. 6 is a schematic diagram of a structure of another terminal device according to an embodiment of this application;
FIG. 7 is a schematic diagram of a software structure of a terminal device according to an embodiment of this application;
FIG. 8 is a schematic flowchart of a layer composition method according to an embodiment of this application;
FIG. 9 is a schematic flowchart of a method in which a terminal device determines whether a current scenario is a CP composition scenario according to an embodiment of this application;
FIG. 10 is a schematic diagram of a VSYNC signal transfer process according to an embodiment of this application;
FIG. 11 is a schematic diagram of a process of switching a display permission from an AP to a CP according to an embodiment of this application;
FIG. 12 is a schematic diagram of a process of synchronizing to-be-composited data from an AP to a CP according to an embodiment of this application;
FIG. 13 is a schematic flowchart of another layer composition method according to an embodiment of this application;
FIG. 14 is a schematic flowchart of another layer composition method according to an embodiment of this application;
FIG. 15 is a schematic diagram of a beneficial effect according to an embodiment of this application;
FIG. 16 is a schematic diagram of a structure of another terminal device according to an embodiment of this application; and
FIG. 17 is a schematic diagram of a structure of a chip system according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items (pieces), including any combination of a single item (piece) or a plurality of the items (pieces). For example, at least one of a, b, or c may represent: a, b, c, a and b, a and c, b and c, and a and b and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" are intended to present a related concept in a specific manner for ease of understanding.

The features, structures, or characteristics in this application may be combined in one or more embodiments by using any appropriate manner. Sequence numbers of the foregoing processes do not mean execution sequences in embodiments of this application. The execution sequences of the processes should be determined based on functions and internal logic of the processes, and should not be construed as any limitation on the implementation processes of embodiments of this application.

In some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements.

In this application, unless otherwise specified, for identical or similar parts in embodiments, refer to each other. In the embodiments of this application, unless otherwise stated or there is a logical conflict, terms and/or descriptions between different embodiments are consistent and may be mutually referenced, and technical features in different embodiments may be combined based on an internal logical relationship thereof, to form a new embodiment. Implementations of this application are not intended to limit the protection scope of this application.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding, terms and concepts related to embodiments of this application are first described.

### 1. Heterogeneous architecture

The heterogeneous architecture is an architecture model that describes hardware composition of a device. In some scenarios, a heterogeneous architecture may mean that a device includes different computing units (or referred to as computing modules, or referred to as processing units, or the like). For example, the computing unit may include but is not limited to an application processor (application processor, AP), a coprocessor (coprocessor, CP), a graphics processing unit (graphics processing unit, GPU), and the like. Different operating systems (operating systems, OSs) may be deployed on these computing units. For example, an operating system, for example, Android^{®} or iOS^{®} may be deployed on the AP. An embedded real-time operating system, for example, Huawei LiteOS may be deployed on the CP. A binary operating system may be deployed on the GPU.

In some embodiments, when a device using a heterogeneous architecture is to complete a function, different computing units need to communicate with each other, or synchronize a status, data, or the like. This execution logic that requires collaboration between different computing units may be referred to as heterogeneous collaboration.

### 2. Composition

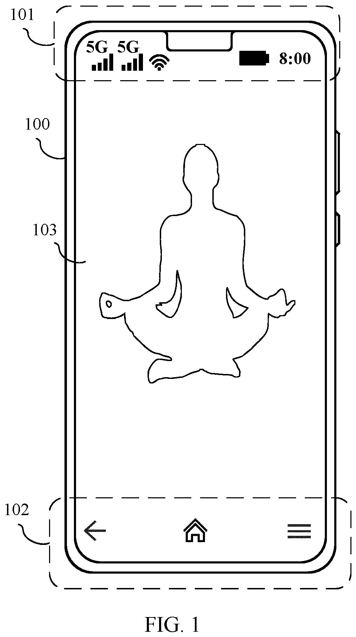

A procedure in which different layers are ranked, a display region is cropped, and a superimposed region is calculated, and the layers are composited into a frame of image is referred to as composition. For example, as shown in FIG. 1, a mobile phone displays an interface 100, and the interface 100 is a frame of image. Layers in the interface 100 include a status bar 101, a navigation bar 102, a wallpaper 103, and the like. A procedure in which the status bar 101, the navigation bar 102, the wallpaper 103, and the like are composited into the interface 100 is composition.

In some embodiments, a composition manner may include offline composition and online composition. The offline composition means that all to-be-displayed layers are drawn on a final layer, and the final layer is then sent to a display screen for display. The online composition means that all to-be-synthesized layers are directly sent to a display screen, and the display screen uses dedicated hardware to composite the to-be-displayed layers and display an image obtained through composition. Compared with the offline composition manner, the online composition saves the step of reading the final layer, and thus can reduce power consumption of the device.

In some embodiments, the online composition may include but is not limited to a manner of performing layer composition by using a GPU, a hardware composer (hardware composer, HWC), or the like.

### 3. Display permission

A display subsystem (display subsystem, DSS) is a general name of display-related hardware. The display subsystem is responsible for extracting pixel data from a memory and sending the pixel data to a display screen. The DSS may be controlled by an operating system in a computing unit. The DSS can be controlled by only one computing unit at a single moment. This permission of the computing unit to control the DSS may be referred to as a display permission.

For example, a device uses a heterogeneous architecture, and computing units included in the heterogeneous architecture include an AP and a CP. In some embodiments, when the device is in a high-performance mode, the DSS may be controlled by the AP. When the device is in a low-power mode, the DSS may be switched to CP control. A procedure in which the display permission is switched between two computing units may be referred to as display permission switching.

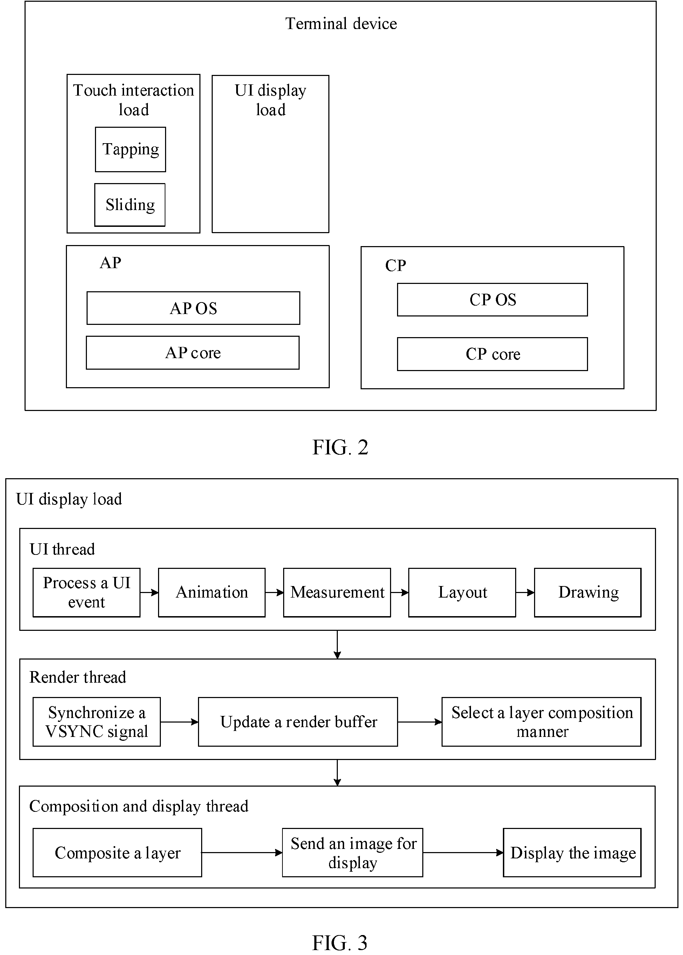

In some scenarios, when the terminal device uses a heterogeneous architecture, the heterogeneous architecture usually includes an AP and a CP. In a system of the terminal device, load related to UI display is deployed on the AP. For example, FIG. 2 is a schematic diagram of an architecture in which load is deployed on a terminal device according to an embodiment of this application. It may be understood that in this embodiment of this application, various operations that are performed by the terminal device and that consumes power of the terminal device are referred to as load.

As shown in FIG. 2, the terminal device includes an AP and a CP. Specifically, the AP may include an AP OS and an AP core, and the CP may include a CP OS and a CP core. It may be understood that the "core" is also referred to as a kernel, a core, or the like, and is a chip that is on a computing unit and that can process data. The kernel of the computing unit may perform command computation, command reception, command storage, data processing, or the like.

For example, touch interaction load, for example, tapping and sliding, and UI display load are all deployed on the AP. It may be understood that when the terminal device receives various operations such as tapping and sliding, an image displayed by the terminal device may change. In this procedure, the terminal device performs operations related to image display. In this embodiment of this application, the operations related to image display are referred to as UI display load.

For example, FIG. 3 shows an example of some UI display load according to an embodiment of this application. For example, as shown in FIG. 3, the UI display load includes a UI thread, a render thread, and a composition and display thread. The UI thread is mainly used to complete drawing of each layer. Specifically, the UI thread may complete a drawing operation by processing a UI event, and performing animation (animation), measurement (measure), layout (layout), drawing (draw), and the like. When a UI element, for example, a view (control), is operated by a user in a specific manner, the terminal device generates an event corresponding to the UI element, and this is referred to as a UI event for short. Animation may be used to implement UI animation effect. Measurement and layout may be used to determine a size and a position of each view (control) that is to be drawn and that is included in the layer. Drawing is used to complete drawing of the view, and the like.

The render thread is used to render each layer. Specifically, the render thread may complete a render operation by synchronizing a vertical synchronization (vertical synchronization, VSYNC) signal, updating a render buffer, and the like. In some embodiments, the VSYNC signal may be used to trigger a procedure of drawing, rendering, and compositing for a next frame of image. A rendered layer may be stored in a buffer by updating the render buffer. Optionally, the render thread may be further used to select a layer composition manner. For example, the layer composition manner may include but is not limited to performing layer composition by using a GPU, an HWC, or the like.

The composition and display thread is used to complete layer composition, send an image for display, and display the image. Rendered one or more layers may be composited into one frame of image through layer composition. The image obtained through composition may be stored in the buffer. The operation of sending an image for display may be used to send the image obtained through composition to a DSS. Optionally, the DSS may process the image, and then send a processed image to a display screen. The operation of displaying the image may be used to display the image on the display screen.

The terminal device often needs to perform UI display load. However, as described above, the terminal device deploys the UI display load on a high-power AP. Consequently, power consumption of the terminal device is high, and battery life is poor.

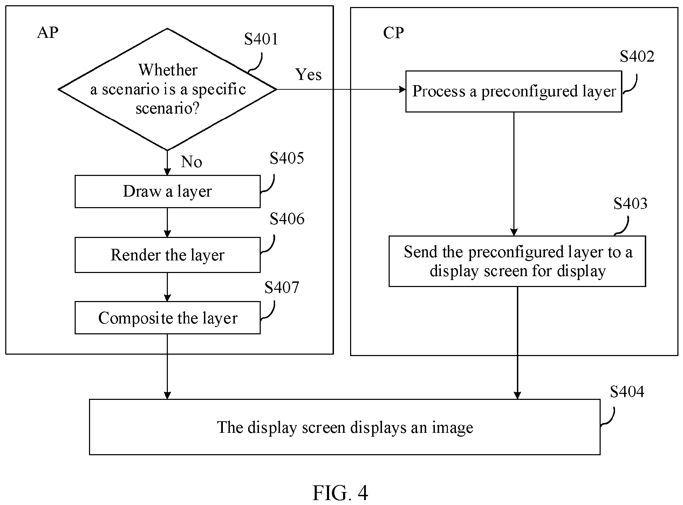

Based on this, a solution is provided in a conventional technology. As shown in FIG. 4, the solution includes the following steps.

S401: An AP determines whether a scenario is a specific scenario.

For example, a specific scenario is an always-on display scenario in which a mobile phone is in a standby mode, or a scenario in which a wrist is raised to turn on a screen of a watch after the screen is turned off.

If the scenario is the specific scenario, step S402 to step S404 are performed. If the scenario is not the specific scenario, step S405 to step S407 and step S404 are performed.

S402: A CP processes a preconfigured layer.

The preconfigured layer is a layer that is drawn and rendered in advance. Specifically, the CP may calculate a display position of the preconfigured layer, determine a to-be-displayed preconfigured layer, and the like.

S403: The CP sends the preconfigured layer to a display screen for display.

S404: The display screen displays an image.

S405: The AP draws a layer.

S406: The AP renders the layer.

S407: The AP composites the layer.

In the foregoing solution, a layer for a specific scenario needs to be drawn in advance. However, there are various scenarios in which the terminal device displays an image. Therefore, it is difficult to draw layers for various scenarios in advance. Therefore, the foregoing solution is applicable only to some specific scenarios, and cannot effectively reduce power consumption of the terminal device and cannot prolong the battery life of the terminal device.

Based on this, embodiments of this application provide a layer composition method. The method is applied to a terminal device including a first processing unit and a second processing unit. The terminal device transfers layer composition performed by the first processing unit to the second processing unit for execution. It may be understood that in this embodiment of this application, layer composition may be an operation of compositing one or more layers into one frame of image. The first processing unit is a high-power processing unit, for example, an AP, and the second processing unit is a low-power processing unit, for example, a CP, or the like. In this way, the terminal device transfers layer composition performed by the AP to the CP for execution. In other words, load related to UI display on the AP is deployed on the CP. This reduces load related to UI display on the AP. In addition, compared with the AP, the CP performs layer composition with lower power consumption. After layer composition is transferred to the CP for execution, a probability that the AP sleeps may increase. This may further reduce power consumption of the terminal device, and prolong battery life of the terminal device.

The technical solution provided in this embodiment of this application may be used in a terminal device 100, or may be used in a system including the terminal device 100.

For example, the terminal device 100 may be a mobile phone, a tablet computer, a handheld computer, a netbook, a personal digital assistant (personal digital assistant, PDA), an augmented reality (augmented reality, AR) device, a virtual reality (virtual reality, VR) device, an artificial intelligence (artificial intelligence, AI) device, or a wearable device. The wearable device includes but is not limited to a smart watch, a smart band, a smart foot-band, or the like. An operating system installed on the terminal device 100 may include but is not limited to iOS^{®}, Android^{®}, HarmonyOS^{®}, Windows^{®}, Linux^{®}, or another operating system. This application does not limit a specific type of the terminal device 100 or an operating system installed on the terminal device 100.

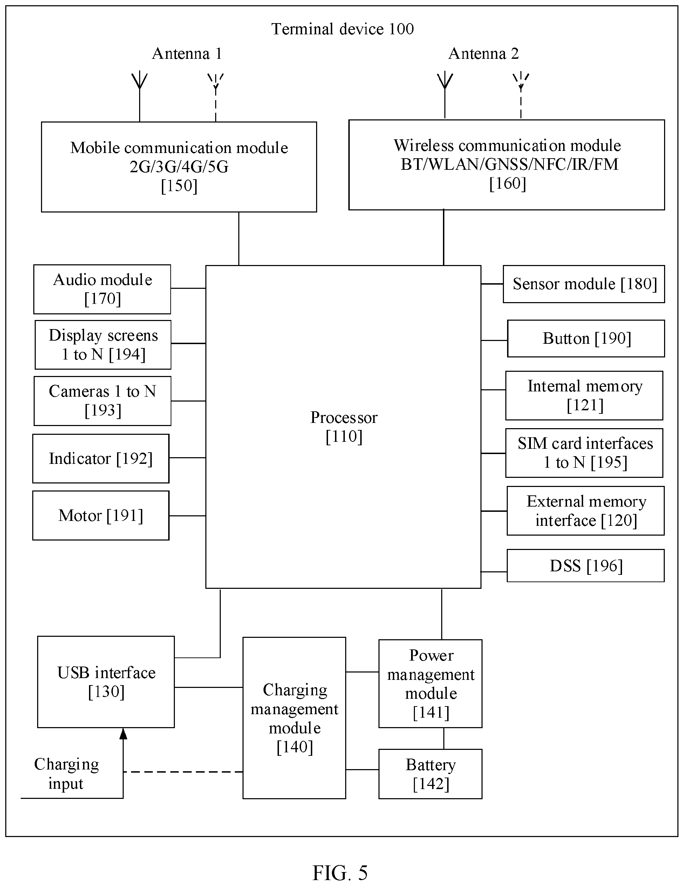

For example, the terminal device 100 is a mobile phone. FIG. 5 is a schematic diagram of a structure of the mobile phone according to an embodiment of this application.

As shown in FIG. 5, the mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display screen 194, a subscriber identity module (subscriber identity module, SIM) card interface 195, a DSS 196, and the like.

The processor 110 may include a plurality of different processing units. For example, the processor 110 may include an AP, a CP, a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

In some embodiments of this application, the processor 110 may include one or more high-power processing units, for example, an AP, and one or more low-power processing units, for example, a CP. In some examples, if power consumption of a processing unit is greater than or equal to a power consumption threshold, the processing unit is a high-power processing unit. If power consumption of a processing unit is less than a power consumption threshold, the processing unit is a low-power processing unit. Optionally, the power consumption threshold may be set by a developer based on an actual requirement.

The controller may generate an operation control signal based on instruction operation code and a time sequence signal, to complete control of instruction reading and instruction execution.

A memory may be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory, thereby avoiding repeated access, reducing waiting time of the processor 110, and improving system efficiency.

In some embodiments, the processor 110 may include one or more interfaces.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like.

A wireless communication function of the mobile phone may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands Different antennas may also be multiplexed to improve antenna utilization. For example, the antenna 1 may be multiplexed as a diversity antenna in a wireless local area network. In some other embodiments, the antennas may be used in conjunction with a tuning switch.

The mobile communication module 150 may provide a solution, applied to the mobile phone, to wireless communication including 2G, 3G, 4G, 5G, or the like. The mobile communication module 150 may include at least one filter, a switch, a power amplifier, a low noise amplifier (low noise amplifier, LNA), and the like.

The wireless communication module 160 may provide a solution, applied to the mobile phone, to wireless communication including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the mobile phone, the antenna 1 and the mobile communication module 150 are coupled, and the antenna 2 and the wireless communication module 160 are coupled, so that the mobile phone can communicate with a network and another device through a wireless communication technology.

The mobile phone implements the display function through the GPU, the display screen 194, the application processor, and the like. The GPU is a microprocessor for image processing, and is connected to the display screen 194 and the application processor. The GPU is configured to perform mathematical and geometric computation, and render an image. The processor 110 may include one or more GPUs, which execute program instructions to generate or change display information. In some embodiments of this application, the GPU may be further configured to perform layer composition.

The display screen 194 is configured to display an image, a video, and the like. The display screen 194 includes a display panel. The display panel may be a liquid crystal display (liquid crystal display, LCD). In some embodiments, the mobile phone may include one or N display screens 194, where N is a positive integer greater than 1. In some embodiments of this application, the display screen may be configured to display an image obtained by compositing one or more layers.

The DSS 196 is configured to extract pixel data from the buffer, and send the pixel data to the display screen. In some embodiments of this application, the DSS may be configured to obtain, from the buffer, an image obtained by compositing one or more layers. The DSS may process the image obtained through composition, for example, changing a color of the image or rotating the image, and send a processed image to the display screen 194 for display.

The camera 193 is configured to capture a static image or a video. In some embodiments, the mobile phone may include one or N cameras 193, where N is a positive integer greater than 1.

The external memory interface 120 may be configured to be connected to an external memory card, for example, a micro SD card, to extend a storage capability of the mobile phone. The external memory card communicates with the processor 110 through the external memory interface 120, to implement a data storage function.

The internal memory 121 may be configured to store computer-executable program code. The executable program code includes instructions. The internal memory 121 may include a program storage area and a data storage area.

The audio module 170 is configured to convert digital audio information into an analog audio signal for output, and is also configured to convert an analog audio input into a digital audio signal. The mobile phone may use the audio module 170 to play music, record sound, or the like. The audio module 170 may include a loudspeaker, a receiver, a microphone, a headset interface, an application processor, and the like to implement audio functions.

Optionally, the sensor module 180 may further include one or more of the following: a touch sensor, a pressure sensor, a gyroscope sensor, a barometric pressure sensor, a magnetic sensor, an acceleration sensor, a distance sensor, a fingerprint sensor, a temperature sensor, an ambient light sensor, a bone conduction sensor, and the like.

The button 190 includes a power button, a volume button, and the like. The button 190 may be a mechanical button, or may be a touch button.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

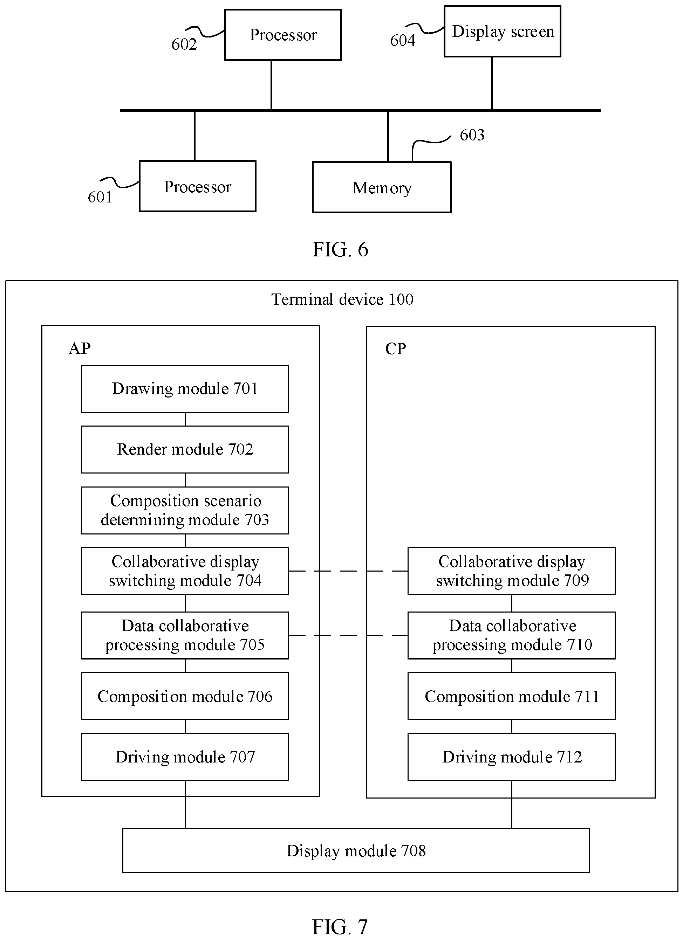

For example, the foregoing uses only the mobile phone as an example to describe a structure of the terminal device 100 in this embodiment of this application, but does not constitute a limitation on a structure and a form of the terminal device 100. Embodiments of this application do not limit the structure and the form of the terminal device 100. For example, FIG. 6 shows an example of another structure of the terminal device 100. As shown in FIG. 6, the terminal device 100 includes a processor 601, a processor 602, a memory 603, and a display screen 604. For implementation of the processor 601, the processor 602, the memory 603, and the display screen 604, refer to implementation of the processor, the memory, and the display screen shown in FIG. 5.

It can be understood that the structure shown in this embodiment of this application does not constitute a specific limitation on the terminal device 100. In some other embodiments of this application, the terminal device 100 may include more or fewer components than those shown in the FIG. 5 or FIG. 6, or some components may be combined, or some components may be split, or there may be a different component layout. The components shown in the figure may be implemented by hardware, software, or a combination of software and hardware.

For example, a software architecture of the terminal device 100 may use a layered architecture, an event-driven architecture, a microkernel architecture, a microservice architecture, a cloud architecture, or the like. For example, processing units installed on the terminal device 100 include an AP and a CP. FIG. 7 is a schematic diagram of a software architecture of the terminal device 100 according to an embodiment of this application.

As shown in FIG. 7, the terminal device 100 includes the AP, the CP, and a display module 708.

The AP includes a drawing module 701, a render module 702, a composition scenario determining module 703, a collaborative display switching module 704, a data collaborative processing module 705, a composition module 706, and a driving module 707.

The CP includes a collaborative display switching module 709, a data collaborative processing module 710, a composition module 711, and a driving module 712.

For example, the drawing module 701 may be configured to perform drawing. For example, the drawing module 701 may complete drawing of a layer via the UI thread shown in FIG. 3. The render module 702 may be configured to perform rendering. For example, the render module 702 may complete rendering of the layer via the render thread shown in FIG. 3. Optionally, the render module 702 may be further configured to select a layer composition manner. For example, the layer composition manner may include but is not limited to performing layer composition by using a GPU, an HWC, or the like. The composition scenario determining module 703 may be configured to determine whether a current scenario is a GPU composition scenario or a CP composition scenario based on the layer composition manner selected by the render module 702. For example, if the GPU is selected for layer composition, the composition scenario determining module 703 may determine that the current scenario is a GPU composition scenario. For another example, if the AP is selected for layer composition, the composition scenario determining module 703 may determine that the current scenario is a CP composition scenario.

It may be understood that in this embodiment of this application, the GPU composition scenario may be a scenario in which the GPU performs layer composition, and the GPU may composite one or more layers into one frame of image. In this scenario, the display permission belongs to the AP. The CP composition scenario may be a scenario in which the CP performs layer composition, and the CP may composite one or more layers into one frame of image. In this scenario, the display permission belongs to the CP.

It may be understood that in the architecture shown in FIG. 7, description is provided by using an example in which the composition scenario determining module 703 is located in the AP. Alternatively, the composition scenario determining module 703 may be located in another location of the terminal device 100. This is not limited in this application.

The collaborative display switching module 704 on the AP side may be configured to interact with the collaborative display switching module 709 on the CP side, to implement display permission switching. For example, when the display permission belongs to the AP, the display permission is switched to the CP. When the display permission belongs to the CP, the display permission is switched to the AP.

The data collaborative processing module 705 on the AP side may be configured to send, to the CP side, to-be-composited data, for example, one or more layers rendered on the AP side. Correspondingly, the data collaborative processing module 710 on the CP side may receive the to-be-composited data from the AP.

Both the composition module 706 on the AP side and the composition module 711 on the CP side may be configured to composite one or more rendered layers into one frame of image. For example, the composition module 706 and the composition module 711 may perform composition by using the HWC. In some embodiments, the composition module 706 and the composition module 711 may share one HWC. In other words, the AP and the CP may share one HWC.

Both the driving module 707 on the AP side and the driving module 712 on the CP side may be configured to start the DSS. The DSS may be configured to process an image obtained through composition, for example, changing a color of the image or rotating the image. A DSS module may further send a processed image to the display module 708 for display. In some embodiments, the driving module 707 and the driving module 712 may share one DSS. In other words, the AP and the CP may share one DSS.

The display module 708 may be configured to display one or more frames of images obtained through composition.

It may be understood that the software modules included in the terminal device 100 in FIG. 7 are merely used as a possible division manner. In actual application, the terminal device 100 may include more or fewer modules, or there may be other module division manners. This is not limited in this application.

All technical solutions in the following embodiments may be implemented in devices with structures shown in FIG. 5, FIG. 6, and FIG. 7.

It may be understood that in this embodiment of this application, the terminal device may perform some or all of the steps in this embodiment of this application. These steps or operations are merely examples. In this embodiment of this application, other operations or variations of various operations may be further performed. In addition, the steps may be performed in different sequences presented in this embodiment of this application, and it is possible that not all operations in this embodiment of this application need to be performed.

In all technical solutions provided in the following embodiments, an example in which a first processing unit is an AP and a second processing unit is a CP is used for description.

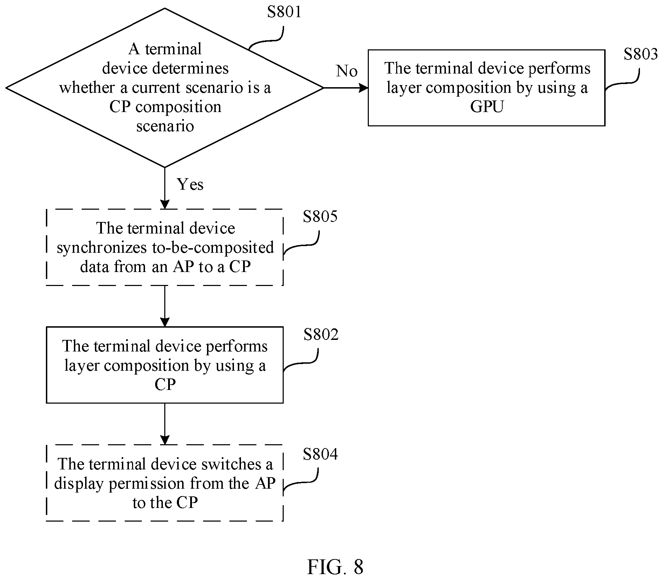

For example, FIG. 8 is a schematic flowchart of a layer composition method according to an embodiment of this application. The method includes the following steps.

S801: A terminal device determines whether a current scenario is a CP composition scenario.

If the current scenario is the CP composition scenario, step S802 is performed, or if the current scenario is not the CP composition scenario, step S803 is performed.

In some embodiments, a layer composition manner may include but is not limited to a manner of performing layer composition by using a GPU and/or a manner of performing layer composition by using an AP. The terminal device may determine, based on the layer composition manner, whether the current scenario is the CP composition scenario.

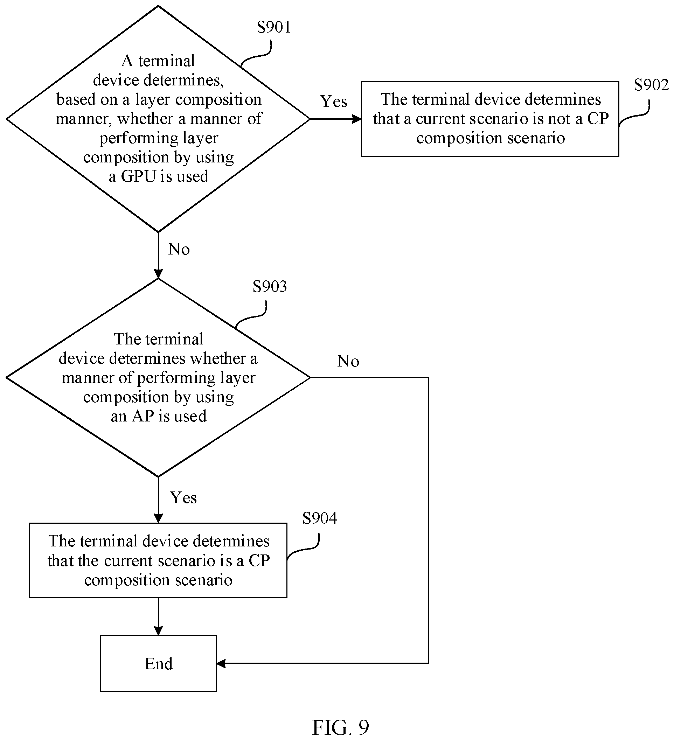

In a possible implementation, FIG. 9 is a schematic flowchart of a method in which the terminal device determines whether the current scenario is the CP composition scenario according to an embodiment of this application. The method includes the following steps.

S901: The terminal device determines, based on the layer composition manner, whether the manner of performing layer composition by using the GPU is used.

If the manner of performing layer composition by using the GPU is used, step S902 is performed, or if the manner of performing layer composition by using the GPU is not used, step S903 is performed.

Optionally, in step S901, the layer composition manner may be selected in the render thread shown in FIG. 3.

S902: The terminal device determines that the current scenario is not the CP composition scenario.

In this step, after the terminal device determines that the current scenario is not the CP composition scenario, the terminal device may composite one or more layers into one frame of image by using the GPU.

S903: The terminal device determines whether the manner of performing layer composition by using the AP is used.

If the manner of performing layer composition by using the AP is used, step S904 is performed, or if the manner of performing layer composition by using the AP is not used, the procedure ends.

In some embodiments, if the layer composition manner includes only the two manners: the manner of performing layer composition by using the GPU and the manner of performing layer composition by using the AP, the terminal device may directly perform step S904 without performing step S903.

S904: The terminal device determines that the current scenario is the CP composition scenario.

It may be understood that the method shown in FIG. 9 may alternatively include more or fewer steps, and an execution sequence of some steps may be changed. For example, the terminal device may directly perform step S903. If the current scenario is the CP composition scenario, step S904 is performed. If the current scenario is not the CP composition scenario, step S902 is performed.

S802: The terminal device performs layer composition by using a CP.

In some embodiments, when performing layer composition by using the CP, the terminal device may specifically complete layer composition by using an HWC.

For example, the CP may receive a VSYNC signal from the HWC, and perform layer composition based on the signal. Optionally, the VSYNC signal may be used to trigger the CP to perform layer composition for a next frame of image.

Optionally, the CP may further synchronize (or send) the VSYNC signal to the AP, so that the AP performs, based on the VSYNC signal, a preparation operation on data of the next frame of image, for example, drawing and rendering a layer included in the next frame of image. Optionally, when performing step S802, the CP may synchronize the VSYNC signal to the AP, or may synchronize the VSYNC signal to the AP after performing step S802.

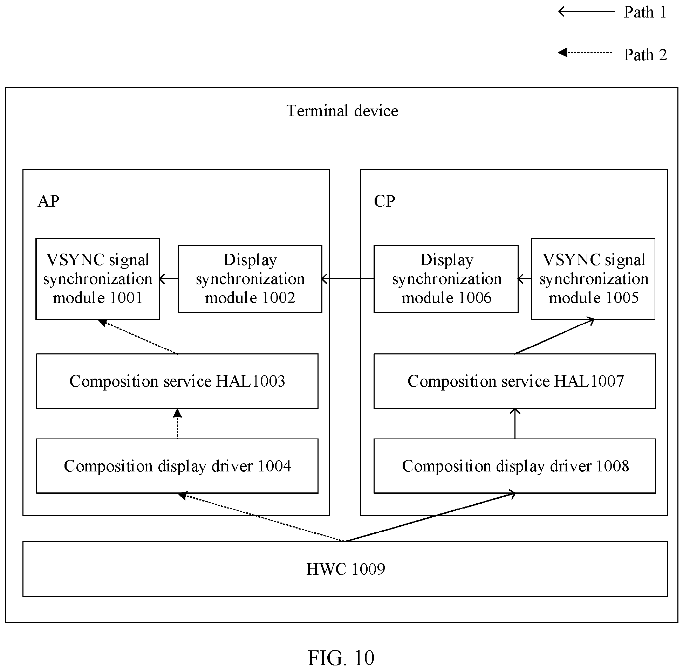

For example, FIG. 10 is a schematic diagram of a VSYNC signal transfer process according to an embodiment of this application. As shown in FIG. 10, an AP and a CP share one HWC, for example, an HWC 1009. The HWC 1009 may generate a VSYNC signal.

When the CP performs layer composition, a VSYNC signal transfer process is shown in a path 1. The VSYNC signal is transferred upward to a composition display driver 1008 on the CP side, and then is transferred to a VSYNC signal synchronization module 1005 on the CP side through a composition service hardware abstract layer (hardware abstract layer, HAL) 1007. The VSYNC signal synchronization module 1005 transfers the VSYNC signal to a display synchronization module 1006. Finally, the CP sends the VSYNC signal to a display synchronization module 1002 on the AP side through the display synchronization module 1006. Correspondingly, the AP receives the VSYNC signal from the CP through the display synchronization module 1002. Further, the display synchronization module 1002 may send the VSYNC signal to a VSYNC signal synchronization module 1001.

When the AP performs layer composition, a VSYNC signal transfer process is shown in a path 2. The VSYNC signal is transferred upward to a composition display driver 1004 on the AP side, and then is transferred to the VSYNC signal synchronization module 1001 through a composition service HAL 1003.

Both the VSYNC signal synchronization module 1001 and the VSYNC signal synchronization module 1005 may be configured to synchronize the VSYNC signal by using the render thread shown in FIG. 3. Both the composition service HAL 1003 and the composition service HAL 1007 may be configured to perform layer composition. Both the composition display driver 1004 and the composition display driver 1008 may be configured to drive the HWC 1009.

Optionally, the display synchronization module 1006 shown in FIG. 10 may be integrated with the data collaborative processing module 710 shown in FIG. 7, or may be integrated with another module, or may be an independent module. Similarly, the display synchronization module 1002 may be integrated with the data collaborative processing module 705 shown in FIG. 7, or may be integrated with another module, or may be an independent module.

S803: The terminal device performs layer composition by using the GPU.

It may be understood that the method shown in FIG. 8 uses an example in which the layer composition manner includes the two manners: the manner of performing layer composition by using the GPU and the manner of performing layer composition by using the AP. When the layer composition manner includes the manner of performing layer composition by using the AP and another manner of performing layer composition, the foregoing step S803 may be further specifically implemented as that layer composition is performed in the another manner. When there are a plurality of other manners, the terminal device may perform layer composition in a corresponding manner based on the layer composition manner selected in the render thread shown in FIG. 3.

Based on the foregoing technical solution, the terminal device determines that the current scenario is the CP composition scenario when the manner of performing layer composition by using the AP is used. In this case, layer composition is performed by using the CP. In other words, the terminal device transfers layer composition performed by the AP to the CP for execution. In other words, load (for example, layer composition) related to UI display on the AP is deployed on the CP. This reduces the load that is related to UI display and that is deployed on the AP. Compared with the AP, the CP performs layer composition with lower power consumption. After layer composition is transferred to the CP for execution, a probability that the AP sleeps may increase. This may reduce power consumption of the terminal device, and prolong the battery life of the terminal device.

In some embodiments, when the terminal device determines that the current scenario is the CP composition scenario, a display permission may still belong to the AP. Therefore, the method in FIG. 8 may further include step S804.

S804: The terminal device switches the display permission from the AP to the CP.

It may be understood that this application does not limit an execution sequence of step S802 and step S804. Step S802 and step S804 may be performed synchronously or may be performed sequentially. When step S802 and step S804 are performed sequentially, this application does not limit a sequence.

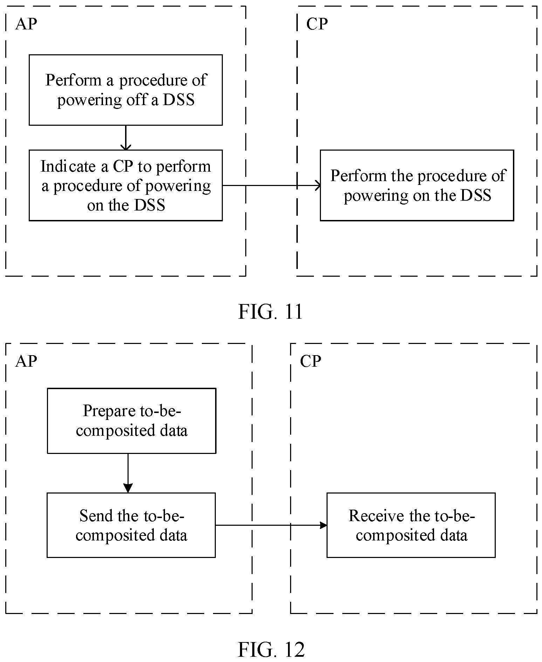

For example, FIG. 11 is a schematic diagram of a process of switching the display permission from the AP to the CP according to an embodiment of this application. In some embodiments, the CP and the AP share one DSS, but the CP and the AP have different DSS drivers. Therefore, the DSS needs to be powered on (or referred to as being turned on) and powered off (or referred to as being turned off), so that the CP or the AP can drive the DSS by using a respective DSS driver. In this way, the CP or the AP can have the display permission. When the display permission belongs to the AP, the DSS on the AP side is in a power-on state. In the process of switching the display permission from the AP to the CP, as shown in FIG. 11, the AP first performs a procedure of powering off the DSS. For example, the AP disconnects a communication connection between a DSS driver of the AP and the DSS. Then, the AP indicates the CP to perform a procedure of powering on the DSS. Correspondingly, after receiving the indication from the AP, the CP performs the procedure of powering on the DSS. For example, the CP establishes a communication connection between a DSS driver of the CP and the DSS. In this case, the display permission belongs to the CP. Further, the process of switching the display permission from the AP to the CP is completed.

In some embodiments, after the AP performs the procedure of powering off the DSS, the terminal device may stop refreshing a display screen, to avoid screen-off of the display screen.

Optionally, in this embodiment of this application, a manner used for communication between the AP and the CP may include but is not limited to inter-process communication (inter-process communication, IPC) and the like.

Based on this solution, the display permission is switched from the AP to the CP, so that the CP subsequently sends an image obtained through composition to the display screen for display.

In some embodiments, one or more layers that are composited by the CP into one frame of image are rendered by the AP. For example, the AP may complete rendering of the layer included in the frame of image by using the render thread shown in FIG. 3. Therefore, before step S802 shown in FIG. 8 is performed, the method shown in FIG. 8 may further include step S805.

S805: The terminal device synchronizes to-be-composited data from the AP to the CP.

For example, the to-be-composited data may mean one or more layers to be composited into one frame of image.

For example, FIG. 12 is a schematic diagram of a process of synchronizing the to-be-composited data from the AP to the CP according to an embodiment of this application. As shown in FIG. 12, the AP prepares the to-be-composited data. For example, the AP may perform operations such as drawing and rendering to generate the to-be-composited data. Then, the to-be-composited data is sent to the CP. Correspondingly, the CP receives the to-be-composited data from the AP.

It may be understood that this application does not limit an execution sequence of step S805 and step S804. Step S805 and step S804 may be performed synchronously, or may be performed sequentially. When step S802 and step S804 are performed sequentially, this application does not limit a sequence.

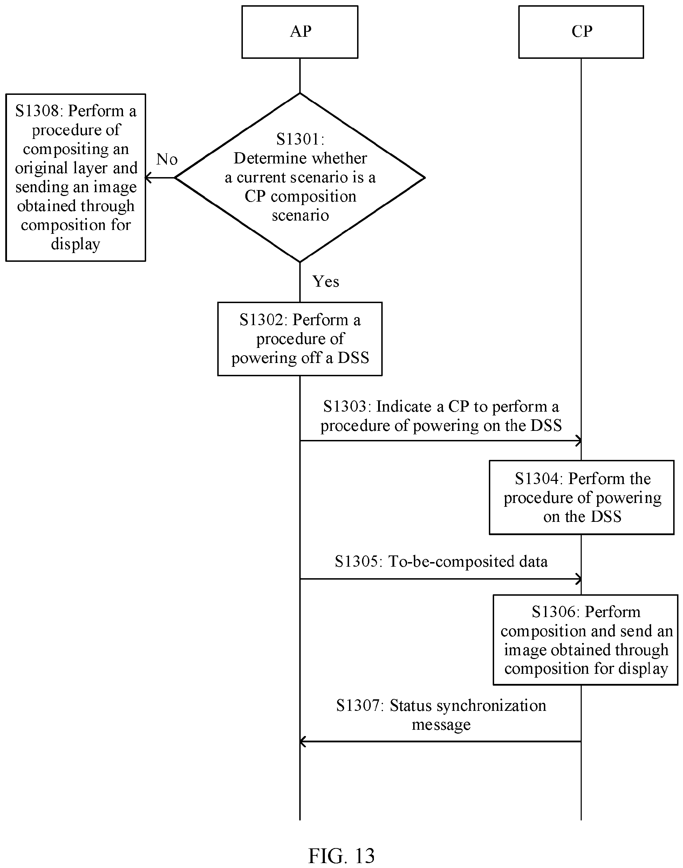

In a specific embodiment, FIG. 13 is a schematic flowchart of another layer composition method according to an embodiment of this application. As shown in FIG. 13, the method includes the following steps.

S1301: An AP determines whether a current scenario is a CP composition scenario.

If the current scenario is the CP composition scenario, step S1302 to step S1307 are performed. If the current scenario is not the CP composition scenario, step S1308 is performed.

For example, the AP may determine whether the current scenario is the CP composition scenario through the composition scenario determining module 703 shown in FIG. 7.

For specific implementation of this step, refer to related implementation of step S801 shown in FIG. 8.

S1302: The AP performs a procedure of powering off a DSS.

S1303: The AP indicates the CP to perform a procedure of powering on the DSS. Correspondingly, the CP receives, from the AP, a notification message for powering on the DSS.

In some embodiments, the CP may receive the notification message by using a thread A.

S1304: The CP performs the procedure of powering on the DSS.

S1305: The AP sends to-be-composited data to the CP. Correspondingly, the CP receives the to-be-composited data from the AP.

In some embodiments, after the AP performs step S1305, a composition thread of the AP enters a blocked state. It may be understood that the composition thread is a thread used by the AP to perform layer composition. After the composition thread of the AP enters the blocked state, the AP stops performing layer combination.

In some embodiments, the CP may receive the to-be-composited data by using a thread B. It may be understood that in this embodiment, an example in which the CP uses two different threads to respectively receive the notification message in step S1303 and the to-be-composited data in step S1305 is used. Alternatively, the CP may use a same thread to receive the notification message and the to-be-composited data. For example, the CP first receives the notification message in step S1303 by using a thread C, and after receiving the notification message, continues to receive the to-be-composited data in step S1305 by using the thread C.

Optionally, an execution sequence of step S1302, step S1303, step S1304, and step S1305 may be changed. For example, the AP may perform step S1305 first, and then perform step S1302 and step S1303. Alternatively, the AP may perform step S1305 synchronously with step S1302 and/or step S1303. For another example, the CP may perform step S1305 first, and then perform step S1303 and step S1304. Alternatively, the CP may perform step S1305 synchronously with step S1303 and/or step S1304. In other words, this application does not limit an execution sequence in which the AP performs step S1302, step S1303, and step S1305, and does not limit an execution sequence in which the CP performs step S1303, step S1304, and step S1305.

S1306: The CP performs composition and sends an image obtained through composition for display.

The CP may composite the to-be-composited data into one frame of image, and then send the image to the DSS. Correspondingly, after processing the image, the DSS may send a processed image to a display screen for display.

In some embodiments, the method shown in FIG. 13 may further include step S1307.

S1307: The CP sends a status synchronization message to the AP. Correspondingly, the AP receives the status synchronization message from the CP.

The status synchronization message may indicate the AP to prepare (or send) the to-be-composited data for a next frame of image, or indicate that the CP has completed composition for an x^{th} frame of image and sent the image for display, where x is an integer greater than or equal to 0.

In some embodiments, when the CP separately receives the notification message in step S1303 and the to-be-composited data in step S1305 by using different threads, the CP may perform step S1307 after both of the threads are finished.

In some embodiments, after performing step S1307 or before performing step S1307, the CP may further send a VSYNC signal to the AP. Alternatively, the step S1307 and the operation of sending the VSYNC signal may be performed synchronously. For a specific VSYNC signal transfer procedure, refer to related implementation in FIG. 10.

In some embodiments, after the AP receives the status synchronization message, the composition thread in step 1305 is unblocked, and execution of the composition thread is finished.

S1308: The AP performs a procedure of compositing an original layer and sending an image obtained through composition for display.

For example, the procedure of compositing the original layer and sending the image obtained through composition for display may be a procedure of performing layer composition and sending an image obtained through composition by using a GPU.

In some embodiments, there may be a scenario in which a display permission needs to be switched from the CP to the AP. For example, in a procedure of displaying a plurality of frames of images, if a previous frame of image is obtained through layer composition by the CP, in this case, the display permission belongs to the CP. However, when the GPU needs to perform layer composition for the next frame of image, in this case, the display permission needs to be switched from the CP to the AP, so that the GPU can complete layer composition for display.

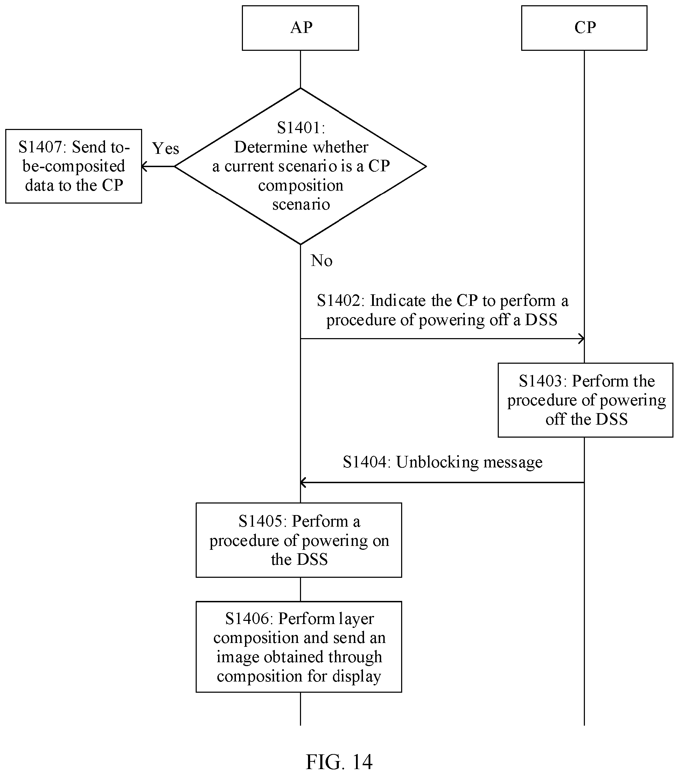

In a specific implementation, FIG. 14 is a schematic flowchart of another layer composition method according to an embodiment of this application. As shown in FIG. 14, the method includes the following steps.

S1401: An AP determines whether a current scenario is a CP composition scenario.

If the current scenario is not the CP composition scenario, step S1402 to step S1406 are performed. If the current scenario is the CP composition scenario, step S1407 is performed.

In some embodiments, this step may also be implemented as that the AP determines whether the current scenario is a GPU composition scenario. If the current scenario is the GPU composition scenario, step S1402 to step S1406 are performed. If the current scenario is not the GPU composition scenario, step S1407 is performed.

In some embodiments, before the AP performs step S1401, based on step S1307 shown in FIG. 13, the AP has learned of to-be-composited data of a frame of image that currently needs to be prepared (or sent).

In some other embodiments, if the method shown in FIG. 13 does not include step S1307, in this embodiment, the CP may send a status synchronization message to the AP. For descriptions of the status synchronization message, refer to the foregoing descriptions. In this embodiment, this application does not limit an occasion at which the CP sends the status synchronization message to the AP. For example, the CP may send the status synchronization message before step S1401, or may send the status synchronization message after step S1401. Optionally, the CP may further indicate to the AP that there is no need to send the to-be-composited data to the CP.

S1402: The AP indicates the CP to perform a procedure of powering off a DSS. Correspondingly, the CP receives, from the AP, a notification message for powering off the DSS.

In some embodiments, after the AP performs step S1402, a composition thread of the AP enters a blocked state. For descriptions of the composition thread, refer to the corresponding descriptions of step S1305.

S1403: The CP performs the procedure of powering off the DSS.

Optionally, before the CP performs step S1403, if the CP has a VSYNC signal, the CP may further first send the VSYNC signal to the AP, so that the AP performs subsequent layer composition and sends an image obtained through composition for display. Certainly, the CP may alternatively send the VSYNC signal at another occasion. This application does not limit an occasion of sending the VSYNC signal.

Optionally, after performing step S1403, the CP may further indicate the AP to perform a procedure of powering on the DSS, or indicate to the AP that the DSS is successfully powered off.

S1404: The CP sends an unblocking message to the AP. Correspondingly, the AP receives the unblocking message from the CP.

The unblocking message indicates the AP to unblock the composition thread in step S1402.

S1405: The AP performs a procedure of powering on the DSS.

S1406: The AP performs layer composition and sends an image obtained through composition for display.

For example, the AP may cooperate with the GPU, to complete layer composition and send the image obtained through composition for display. For example, the AP may send various instructions and to-be-composited data to the GPU. Correspondingly, the GPU may composite the to-be-composited data into one frame of image. Then, the AP may send the image to the DSS. Correspondingly, after processing the image, the DSS may send a processed image to a display screen for display.

S1407: The AP sends the to-be-composited data to the CP. Correspondingly, the CP receives the to-be-composited data.

The to-be-composited data may be used by the CP to perform layer composition and send the image obtained through composition for display. Optionally, the AP and the CP may perform step 1305 shown in FIG. 13 and subsequent related steps.

Certainly, in another embodiment, the foregoing display permission switching (for example, the display permission is switched from the AP to the CP, or the display permission is switched from the CP to the AP) may not be performed. For example, when the display permission belongs to the AP and the CP performs composition, the CP may send an image obtained through composition to the AP. The AP completes a procedure of sending the image for display. For another example, when the display permission belongs to the CP, and the GPU performs composition, the GPU may alternatively send an image obtained through composition to the CP. The CP completes a procedure of sending the image for display.

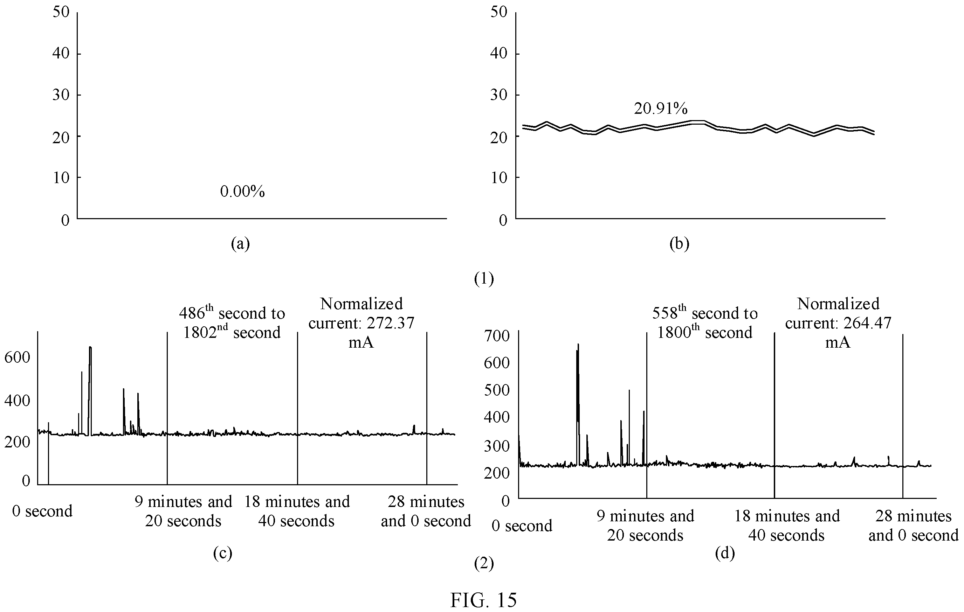

For example, FIG. 15 is a schematic diagram of a beneficial effect according to an embodiment of this application. It may be understood that in FIG. 15, a scenario in which a terminal device displays 30 frames of images is used as an example. In this scenario, the technical solution provided in embodiments of this application may reduce load on the AP by about 15% to 20%, and reduces power consumption of the terminal device by about 7 milliamperes.

As shown in (1) in FIG. 15, (a) shows a benefit to load on an AP, for example, 0%, when the AP performs layer composition. (b) shows a benefit to load on the AP corresponding to the technical solution provided in embodiments of this application. For example, load on the AP is reduced by 20.91%.

As shown in (2) in FIG. 15, (c) shows current consumption of a terminal device when the AP performs layer composition. For example, in a time period from the 486^{th} second to the 1802^{nd} second, current consumption of the terminal device is 272.37 milliamperes. (d) shows current consumption of the terminal device corresponding to the technical solution provided in embodiments of this application. For example, in a time period from the 558^{th} second to the 1800^{th} second, current consumption of the terminal device is 264.47 milliamperes. The current consumption is reduced by about 7 milliamperes.

In a scenario in which the terminal device displays 60 frames of images, the technical solution provided in embodiments of this application may reduce load on the AP by about 23% to 28%, and reduce power consumption of the terminal device by about 11 milliamperes.

The foregoing mainly describes the solution provided in the embodiment of this application from a perspective of a method. It may be understood that to implement the foregoing functions, the terminal device includes corresponding hardware structures and/or software modules for performing the functions. With reference to the units and algorithm steps described in embodiments disclosed in this application, embodiments of this application can be implemented in a form of hardware or hardware and computer software. Whether a function is performed by hardware or hardware driven by a computer depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the terminal device may be divided into functional modules based on the foregoing method examples. For example, each functional module corresponding to each function may be obtained through division, or two or more functions may be integrated into one processing unit. The integrated unit may be implemented in a form of hardware, or may be implemented in a form of a software functional module. It should be noted that, in this embodiment of this application, division into the units is an example, and is merely a logical function division. In actual implementation, another division manner may be used.

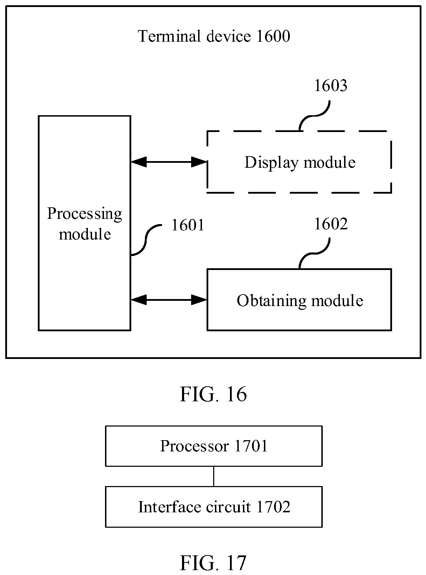

FIG. 16 is a schematic diagram of a structure of another terminal device according to an embodiment of this application. A terminal device 1600 may be configured to implement the method described in each method embodiment. For example, the terminal device 1600 may specifically include a processing module 1601 and an obtaining module 1602.

The processing module 1601 is configured to support the terminal device 1600 to perform a processing function in any one of FIG. 1 to FIG. 15.

The obtaining module 1602 is configured to support the terminal device 1600 to perform an obtaining function in any one of FIG. 1 to FIG. 15.

Optionally, the terminal device 1600 shown in FIG. 16 may further include a display module 1603. The display module 1603 may be configured to display an image obtained through composition, and/or the display module 1603 is further configured to support the terminal device 1600 to perform another display operation performed by the terminal device in embodiments of this application.

Optionally, the terminal device 1600 shown in FIG. 16 may further include a communication module (not shown in FIG. 16). The communication module is configured to support the terminal device 1600 to perform a step of performing communication between the terminal device and another device in embodiments of this application.

Optionally, the terminal device 1600 shown in FIG. 16 may further include a storage module (not shown in FIG. 16). The storage module stores a program or instructions. When the processing module 1601 executes the program or the instructions, the terminal device 1600 shown in FIG. 16 may perform the method shown in the foregoing method embodiment.

For a technical effect of the terminal device 1600 shown in FIG. 16, refer to the technical effect of the method in the foregoing method embodiment. Details are not described herein again. The processing module 1601 in the terminal device 1600 shown in FIG. 16 may be implemented as a processor or a circuit component related to the processor, and may be a processor or a processing module. The communication module may be implemented as a transceiver or a circuit component related to the transceiver, and may be a transceiver or a transceiver module. The display module 1603 may be implemented as a component related to a display screen.

An embodiment of this application further provides a chip system. As shown in FIG. 17, the chip system includes at least one processor 1701 and at least one interface circuit 1702. The processor 1701 and the interface circuit 1702 may be interconnected through a line. For example, the interface circuit 1702 may be configured to receive a signal from another apparatus. For another example, the interface circuit 1702 may be configured to send a signal to another apparatus (for example, the processor 1701). For example, the interface circuit 1702 may read instructions stored in a memory, and send the instructions to the processor 1701. When the instructions are executed by the processor 1701, the terminal device may be enabled to perform the steps performed by the terminal device in the foregoing embodiment. Certainly, the chip system may further include another discrete device. This is not specifically limited in this embodiment of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed by using a combination of hardware in the processor and a software module.

An embodiment of this application further provides a computer storage medium. The computer storage medium stores computer instructions. When the computer instructions are run on a terminal device, the terminal device is enabled to perform the method in the foregoing method embodiment.

An embodiment of this application provides a computer program product. The computer program product includes a computer program or instructions. When the computer program or the instructions are run on a computer, the computer is enabled to perform the method in the foregoing method embodiment.

In addition, an embodiment of this application further provides an apparatus. The apparatus may be specifically a chip, a component, or a module. The apparatus may include a processor and a memory that are connected to each other. The memory is configured to store computer executable instructions. When the apparatus runs, the processor may execute the computer executable instructions stored in the memory, the apparatus is enabled to perform the method in the foregoing method embodiment.

The terminal device, the computer storage medium, the computer program product, or the chip provided in embodiments each are configured to perform the corresponding method provided above. Therefore, for a beneficial effect that can be achieved by the terminal device, the computer storage medium, the computer program product, or the chip, refer to the beneficial effect in the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. Embodiments may be combined with or referenced to each other without conflicting with each other. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A layer composition method, applied to a terminal device comprising a first processing unit and a second processing unit, wherein the method comprises:
obtaining a composition request of a first layer, wherein the first layer is a layer rendered by using the first processing unit; and
in response to the composition request of the first layer, compositing the first layer into an image by using the second processing unit, wherein
the first processing unit is a high-power processing unit, and the second processing unit is a low-power processing unit.

2. The method according to claim 1, wherein the composition request of the first layer indicates the terminal device to composite the first layer into the image by using the first processing unit.

3. The method according to claim 1 or 2, wherein before the compositing the first layer into an image by using the second processing unit, the method further comprises:
receiving, by the second processing unit, the first layer from the first processing unit.

4. The method according to any one of claims 1 to 3, wherein the method further comprises:
if a display permission belongs to the first processing unit, switching the display permission to the second processing unit, wherein the display permission is a permission for controlling a display subsystem DSS.

5. The method according to claim 4, wherein the switching the display permission to the second processing unit comprises:
powering off, by the first processing unit, the DSS;
sending, by the first processing unit, a first message to the second processing unit; and
in response to the first message, powering on, by the second processing unit, the DSS.

6. The method according to any one of claims 1 to 5, wherein after the compositing the first layer into an image by using the second processing unit, the method further comprises:
sending, by the second processing unit, a status synchronization message to the first processing unit, wherein the status synchronization message indicates that the second processing unit has composited the first layer into the image.

7. The method according to any one of claims 1 to 6, wherein the method further comprises:
obtaining, by the second processing unit, a vertical synchronization VSYNC signal; and
sending, by the second processing unit, the VSYNC signal to the first processing unit, wherein the VSYNC signal indicates the first processing unit to render a layer comprised in a next frame of image.

8. The method according to any one of claims 4 to 7, wherein the terminal device further comprises a third processing unit, and the method further comprises:
obtaining a composition request of a second layer; and
if the composition request of the second layer indicates the terminal device to composite the second layer into an image by using the third processing unit, compositing, by the terminal device in response to the composition request of the second layer, the second layer into the image by using the third processing unit.

9. The method according to claim 8, wherein the method further comprises:
if the display permission belongs to the second processing unit, switching the display permission to the first processing unit.

10. The method according to claim 9, wherein the switching the display permission to the first processing unit comprises:
sending, by the first processing unit, a second message to the second processing unit;
in response to the second message, powering off, by the second processing unit, the DSS;
sending, by the second processing unit, a third message to the third processing unit; and
in response to the third message, powering on, by the first processing unit, the DSS.

11. The method according to any one of claims 8 to 10, wherein the first processing unit comprises an application processor AP, and/or the second processing unit comprises a coprocessor CP, and/or the third processing unit comprises a graphics processing unit GPU.

12. A terminal device, comprising a processor and a memory, wherein the memory is coupled to the processor, the memory is configured to store computer program code, the computer program code comprises computer instructions, and the processor reads the computer instructions from the memory, to enable the terminal device to perform the method according to any one of claims 1 to 11.

13. A computer-readable storage medium, wherein the computer-readable storage medium comprises a computer program, and when the computer program is run on a terminal device, the terminal device is enabled to perform the method according to any one of claims 1 to 11.
